# EUROPEAN PATENT SPECIFICATION

(11) **EP 4 176 779 B1**
(45) Date of publication and mention of the grant of the patent: **17.01.2024**
(21) Application number: 22186388.9
(22) Date of filing: 22.07.2022
(51) Int. Cl.: A47J 37/06, A47J 37/04

(54) **WORKTOP OVEN FOR COOKING FOODS WITH TWO LEVELS**
ARBEITSPLATTENOFEN ZUM KOCHEN VON LEBENSMITTELN MIT ZWEI EBENEN
FOUR DE PLAN DE TRAVAIL POUR LA CUISSON D'ALIMENTS À DEUX NIVEAUX

(30) Priority: 03.11.2021 IT 202100027962
(43) Date of publication of application: 10.05.2023
(73) Proprietor: De'Longhi Appliances S.r.l. Divisione Commerciale ARIETE, 50013 Campi Bisenzio, Firenze (IT)
(72) Inventor: PICCHI, Michele, 56020 Pontedera (Pisa) (IT); CIFARELLI, Filippo, 50122 Firenze (IT)
(74) Representative: Rapisardi, Mariacristina

(56) References cited:
- CN-B- 109 549 505
- CN-U- 211 093 506
- US-A1- 2017 251 872
- US-A1- 2020 352 385

## Description

The present invention relates to a worktop oven for cooking foods.

Domestic worktop ovens for cooking foods, typically pizza, have been on the market for some time.

It is known that such domestic worktop ovens are generally distinguished by a shell shape or a closed shape which resembles the masonry wood oven, and generally have a cooking surface provided with two electrical resistances, one below the cooking surface and one in the upper part for uniform and controlled cooking of the food.

The closed shape enables the heat to be maintained inside the oven in order to speed up the cooking of the food.

Therefore, such domestic worktop ovens are notoriously limited, as they only enable one food to be cooked at a time, typically one pizza at a time.

There is therefore a need to improve the structure of known domestic worktop ovens.

US 2020/352385 A1 discloses a worktop oven with two separate cooking cavities heated by burners. <JI

The technical task of the present invention is, therefore, to provide a domestic worktop oven which obviates the drawbacks of the prior art.

Within the context of this technical task an object of the invention is to provide a domestic worktop oven which enables more than one food, typically at least two foods, to be cooked at a time. Another object of the invention is to provide a domestic worktop oven which selectively enables the insertion, cooking, control and recovery of at least two foods, independently of each other. Last but not least, the object of the invention is to provide a domestic worktop oven with contained sizes and dimensions for favourable storage when it is not being used.

The technical task, as well as these and other objects, according to the present invention are achieved by providing a worktop oven for cooking foods characterised in that it comprises a support base, a lid, an intermediate element positioned between said support base and said lid, where said support base supports a first cooking surface with which a first electric heater is associated and said intermediate element supports a second cooking surface with which a second electric heater is associated, where said intermediate element is configured to delimit with said base a first cooking chamber and said lid is configured to delimit with said intermediate element a second cooking chamber positioned above said first cooking chamber, where a first operating connection means is present between said intermediate element and said lid which has an opening position and a closing position of said second cooking chamber, and where a second operating connection means shaped like an articulated parallelogram is provided between said base and said intermediate element which has an opening position and a closing position of said first cooking chamber.

In one embodiment, in the closed position, the intermediate element is stacked onto the base in order to close an upper access mouth to the first cooking chamber, and in the opening position the intermediate element is raised and at least partially offset from the upper access mouth to the first cooking chamber.

In one embodiment, the second cooking surface through the articulated parallelogram shaped second operating connection means can be moved in parallel with the lying plane that remains horizontal.

In one embodiment, the articulated parallelogram shaped second operating connection means comprises two pairs of connecting rods positioned on opposite sides of the oven and hinged by means of lower horizontal pins to the base and through upper horizontal pins to the intermediate element.

Other features of the present invention are further defined in the following claims.

Further characteristics and advantages of the invention will more fully emerge from the description of a preferred but not exclusive embodiment of the worktop oven for cooking foods according to the invention, illustrated by way of non-limiting example in the accompanying figures of the drawings, in which:

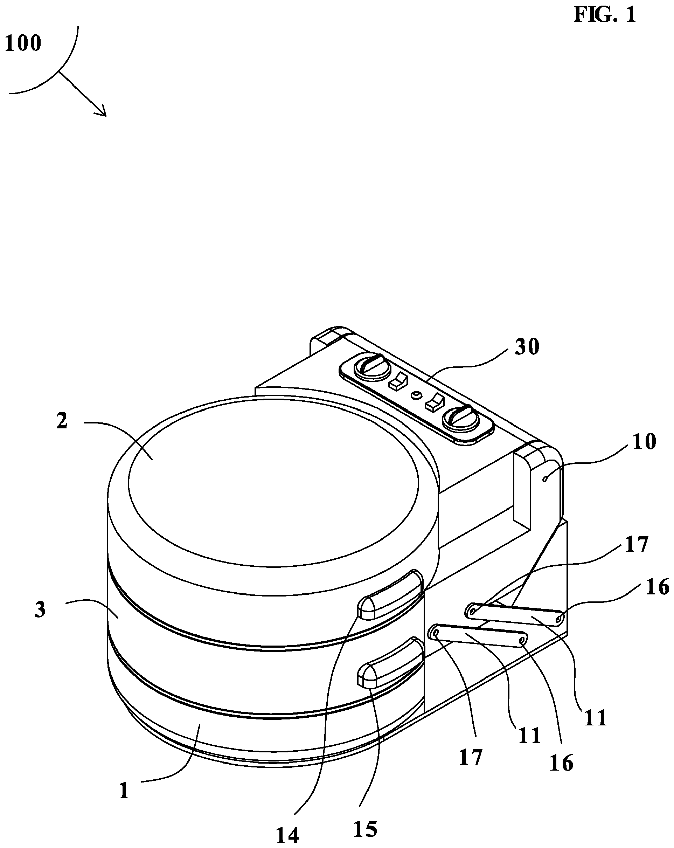

figure 1 shows an axonometric assembly view of the closed oven;

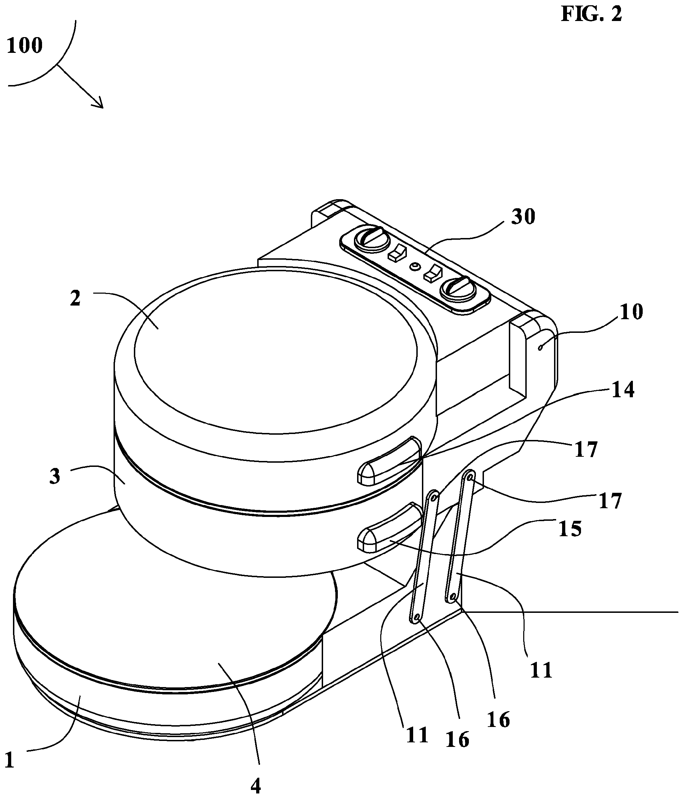

figure 2 shows an axonometric assembly view of the oven with a first cooking surface open;

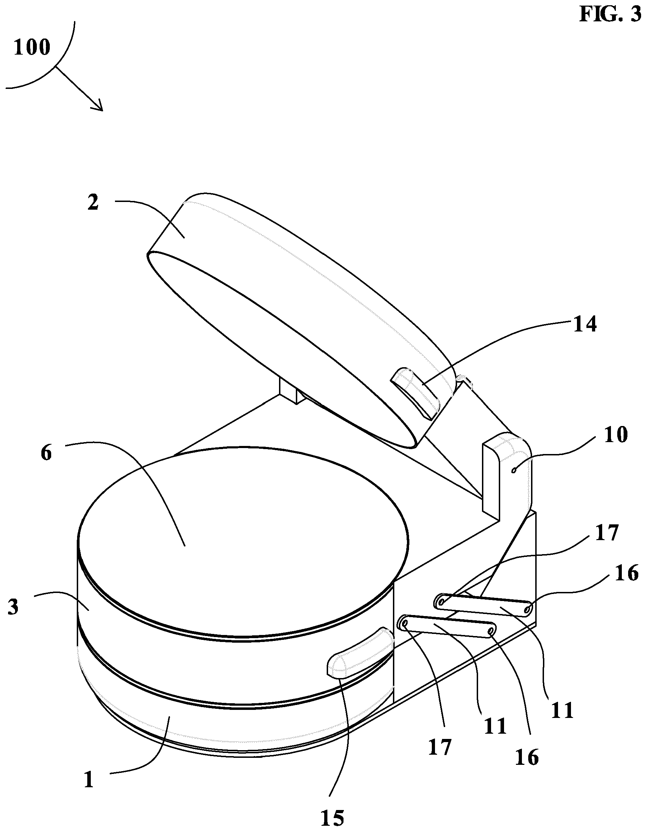

figure 3 shows an axonometric assembly view of the oven with a second cooking surface open;

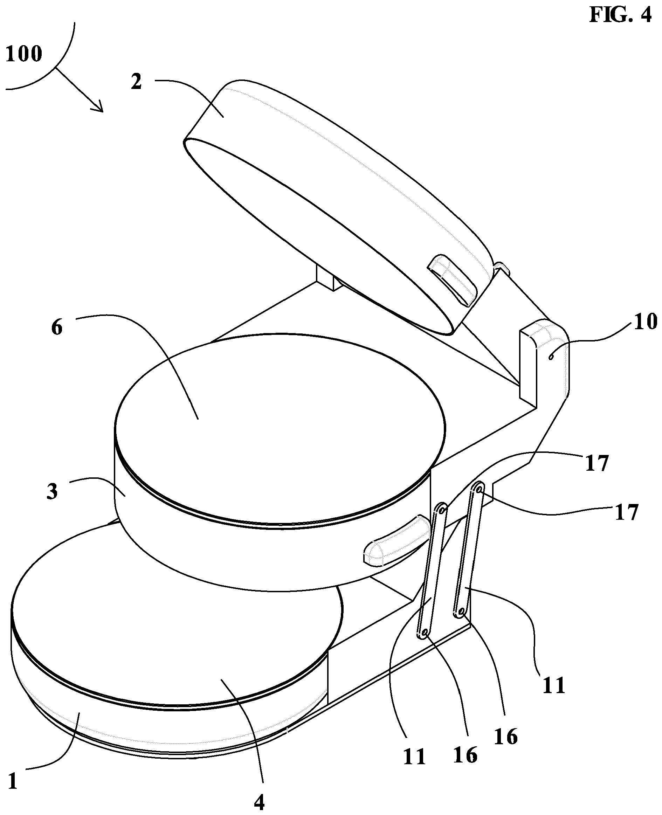

figure 4 shows an axonometric assembly view of the oven with a first and a second cooking surface open;

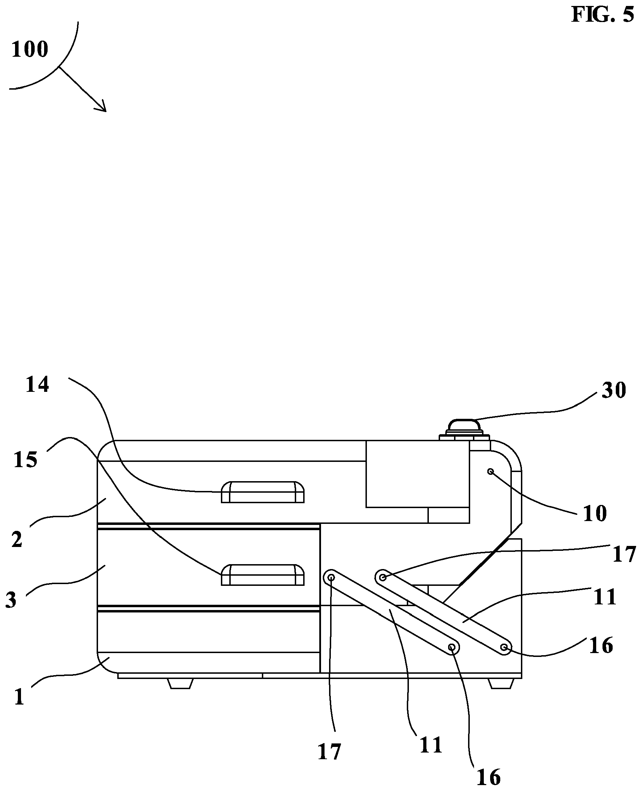

figure 5 shows a lateral view of the closed oven;

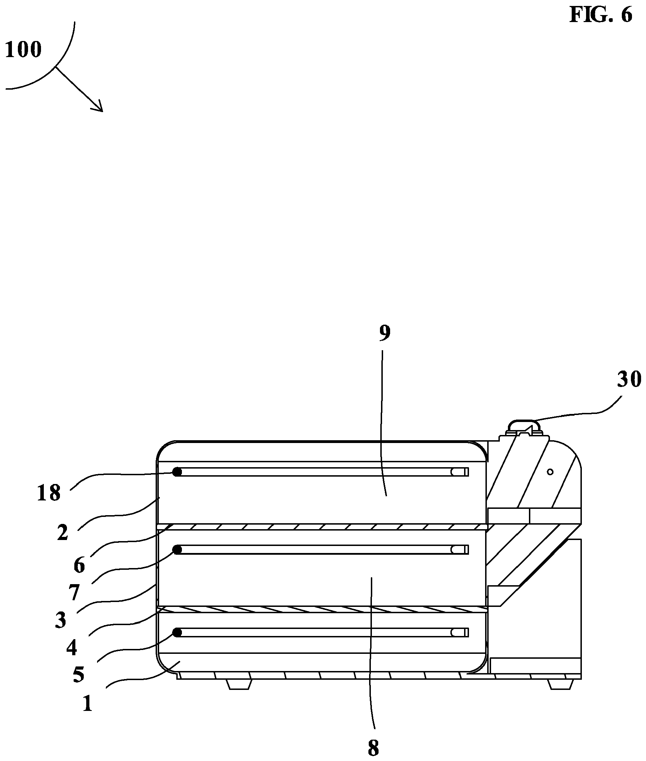

figure 6 shows a longitudinal section of the closed oven;

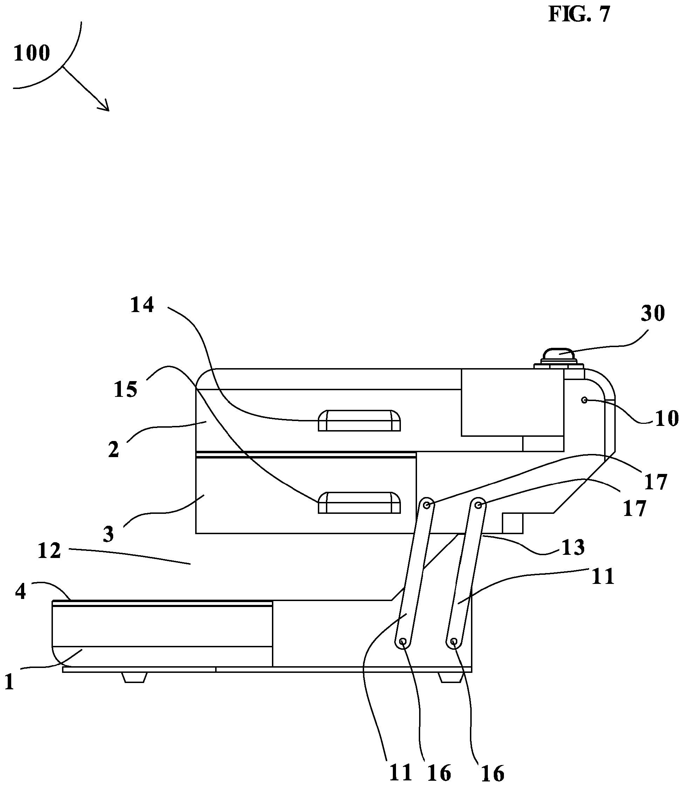

figure 7 shows a lateral view of the oven with a first cooking surface open;

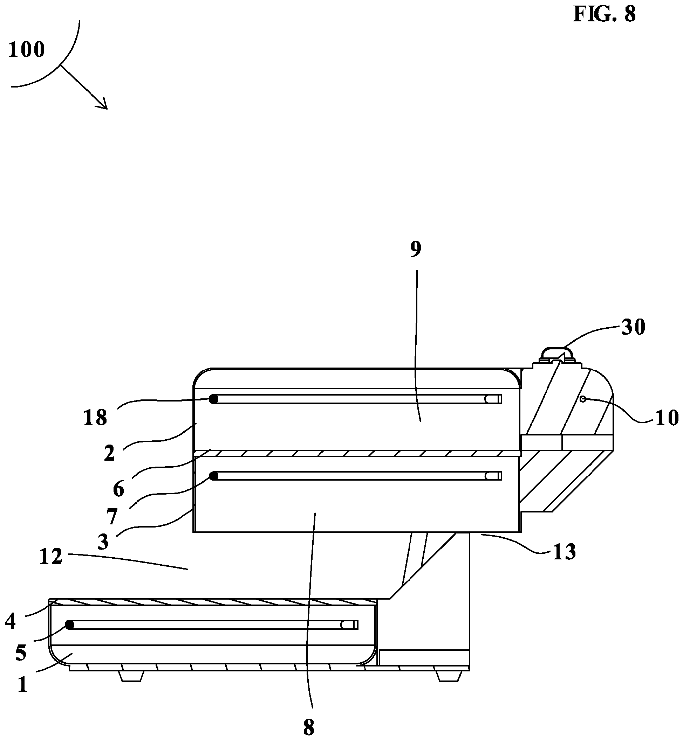

figure 8 shows a longitudinal section of the oven with a first cooking surface open;

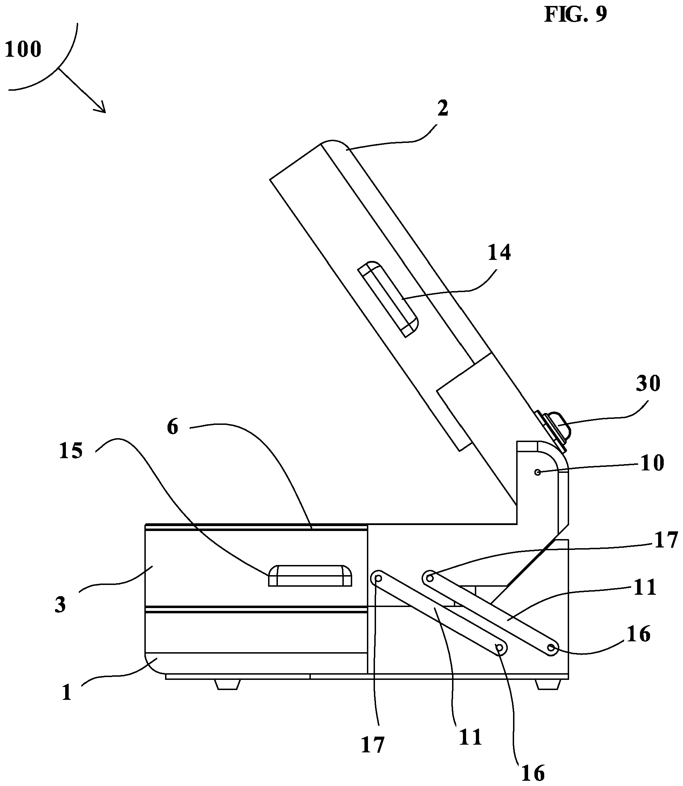

figure 9 shows a lateral view of the oven with a second cooking surface open;

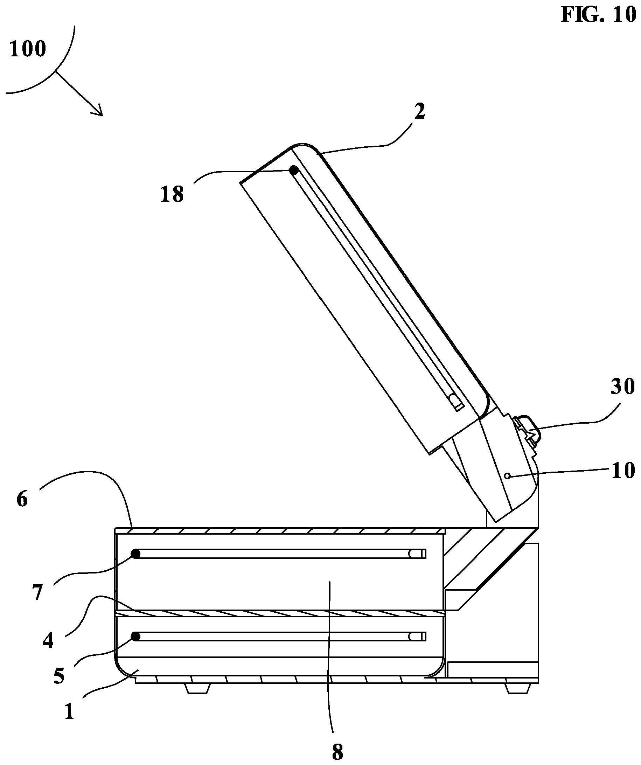

figure 10 shows a longitudinal section of the oven with a second cooking surface open;

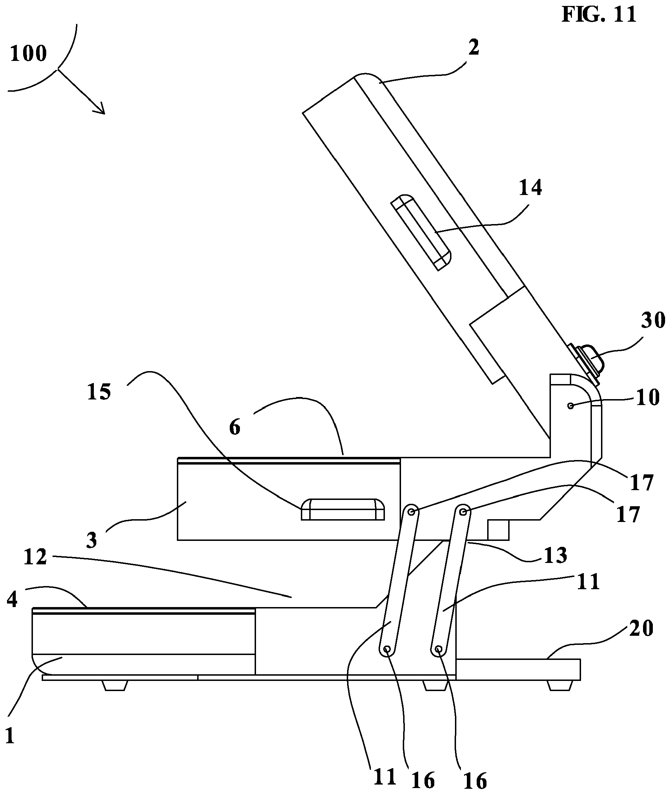

figure 11 shows a lateral view of the oven with a first and a second cooking surface open.

The following detailed description refers to the appended drawings, which form a part thereof.

In the drawings, similar reference numbers typically identify similar components, unless the context indicates otherwise.

The embodiments described in the detailed description and in the drawings are not intended to be limiting.

There may be other embodiments, and other modifications can be made without departing from the spirit and scope of the subject matter in question presented herein.

The aspects of the present description, as generally described in the present context and illustrated in the figures, may be arranged, replaced, combined and designed in a wide range of different configurations, which are all contemplated explicitly and are part of this description.

With reference to the cited figures, a worktop oven for cooking food is shown that is denoted in its entirety by reference number 100.

The oven 100 comprises a support base 1, a lid 2, an intermediate element 3 positioned between the support base 1 and the lid 2.

The support base 1 supports a first cooking surface 4 with which a first electric heater 5 is associated; the intermediate element 3 supports a second cooking surface 6 with which a second electric heater 7 is associated.

A third electric heater 18 is preferably associated with the lid 2.

Typically, the first cooking surface 4 and the second cooking surface 6 are made of refractory stone.

The intermediate element 3 is configured to delimit, with the base 1, a first cooking chamber 8.

The lid 2 is configured to delimit, with the intermediate element 3, a second cooking chamber 9 positioned above the first cooking chamber 8.

Appropriately, the first electric heater 5 heats the first cooking chamber 8, the third electric heater 18 heats the second cooking chamber 9; advantageously, the second electric heater 7 heats the first cooking chamber 8 and the second cooking chamber 9.

Advantageously, the lid 2 is provided with a control panel 30 for the selective control and management of the first electric heater 5, of said second electric heater 7 and of the third electric heater 18.

The oven 100 has a first operating connection means 10 between the intermediate element 3 and the lid 2, typically in the form of a hinge; the lid 2 and the intermediate element 3 have respective handgrips 14, 15; appropriately, the lid 2 has an opening position and a closing position of the second cooking chamber 9.

Advantageously, a second operating connection means 11 is provided, typically shaped like an articulated parallelogram, between the base 1 and the intermediate element 3; appropriately the intermediate element 3 has an opening position and a closing position of the first cooking chamber 8.

In the closing position, the intermediate element 3 is stacked onto said base 1 to close an upper access mouth 12 to the first cooking chamber 8; in the opening position the intermediate element 3 is raised and at least partially offset from the upper access mouth 12 to the first cooking chamber 8.

Advantageously, according to the present invention, the second cooking surface 6 through the articulated parallelogram shaped second operating connection means 11 can be raised and moved in parallel with the lying plane thereof that remains horizontal.

The articulated parallelogram shaped second operating connection means 11 comprises two pairs of connecting rods positioned on opposite sides of the oven and hinged by means of lower horizontal pins 16 to the base 1 and through upper horizontal pins 17 to the intermediate element 3.

Appropriately, the base 1 has a vertical bracket 13 for supporting the intermediate element 3 in the opening position thereof.

Appropriately, in the case of simultaneously opening the lid 2 and the intermediate compartment 3, in order to prevent any backward imbalance of the oven 100 because of the centre of gravity being too far back due to the double opening configuration, the base 1 has an anti-tip means 20.

Such anti-tip means 20 may be fixed or retractable and, if retractable, it can comprise one or more elements which can be slidably mounted or hinged to the rear of the base 1, which, when retracted, facilitate placing the oven 100 back in the domestic environment.

In one embodiment the anti-tip means 20 is actuated manually by the user.

In one embodiment, the oven 100 comprises a control means of the known type, e.g. a position control microswitch, which prevents switching on in the event of lack of manual actuation of the anti-tip means 20 in the work position.

In one embodiment, the anti-tip means 20 is connected to the articulated parallelogram shaped second operating connection means 11 and is actuated automatically with the opening movement of the intermediate compartment 3.

In one embodiment, the oven 100 has a mechanical interlocking means of the known type which prevents the simultaneous opening of the lid 2 and of the intermediate compartment 3.

The operation of the worktop oven for cooking food according to the invention is clear from what is described and illustrated and, in particular, is substantially as follows.

The user powers the oven by the domestic electricity grid with known means not highlighted in the figures, and according to the need to cook a first food he alternatively opens either the lid 2 which has the second cooking surface 6 of the second cooking chamber 9, or the intermediate element 3 which has the first cooking surface 4 of the first cooking chamber 8, and inserts the first food into the selected cooking chamber.

In the event of needing to cook a second food, the user consequently opens the cooking chamber not used by the first food, and inserts the second food.

The anti-tip means 20 appropriately activated prevents the oven 100 from overturning in the simultaneous opening position of the lid 2 and the intermediate element 3.

The user closes the cooking chambers used, and through the control panel 30 sets the required cooking times and modes.

When the cooking has finished, and at a signal of the panel 30, the user repeats the opening operations of the lid 2 and/or of the intermediate element 3 and takes the foods out of the respective cooking chambers.

It has in practice been noted how a worktop oven for cooking foods according to the invention is particularly advantageous for providing a domestic worktop oven which enables various foods to be cooked, typically at least two foods, typically at least two pizzas, at a time.

Another advantage of the invention is to provide a domestic worktop oven which selectively enables the insertion, cooking, control and recovery of at least two foods, independently of each other.

Last but not least, the object of the invention is to provide a domestic worktop oven with contained sizes and dimensions for favourable storage when it is not being used.

A domestic worktop oven as conceived herein is susceptible to many modifications and variants, all falling within the scope of the inventive concept as defined by the claims.

In practice, the materials used, as well as the dimensions, can be any according to the needs and the state of the art.

## Claims

1. A worktop oven for cooking foods (100) comprising a support base (1), a lid (2), an intermediate element (3) positioned between said support base (1) and said lid (2), where said support base (1) supports a first cooking surface (4) with which a first electric heater (5) is associated and said intermediate element (3) supports a second cooking surface (6) with which a second electric heater (7) is associated, where said intermediate element (3) is configured to delimit with said base (1) a first cooking chamber (8) and said lid (2) is configured to delimit with said intermediate element (3) a second cooking chamber (9) positioned above said first cooking chamber (8), where a first operating connection means (10) is present between said intermediate element (3) and said lid (2) which has an opening position and a closing position of said second cooking chamber (9), and where a second operating connection means (11) shaped like an articulated parallelogram is provided between said base (1) and said intermediate element (3) which has an opening position and a closing position of said first cooking chamber (8).

2. The worktop oven for cooking foods (100) according to claim 1, **characterised in that** in said closing position said intermediate element (3) is stacked onto said base (1) to close an upper access mouth (12) to said first cooking chamber (8), and in said opening position said intermediate element (3) is raised and at least partially offset from said upper access mouth (12) to said first cooking chamber (8).

3. The worktop oven for cooking foods (100) according to any one of the preceding claims, **characterised in that** said second cooking surface (6) through said articulated parallelogram shaped second operating connection means (11) can be raised and moved in parallel with the lying plane that remains horizontal.

4. The worktop oven for cooking foods (100) according to any one of the preceding claims, **characterised in that** said articulated parallelogram shaped second operating connection means (11) comprises two pairs of connecting rods positioned on opposite sides of said oven and hinged by means of lower horizontal pins (16) to the base (1) and through upper horizontal pins (17) to the intermediate element (3).

5. The worktop oven for cooking foods (100) according to the preceding claim, **characterised in that** said base (1) has a vertical bracket (13) for supporting said intermediate element (3) in said opening position thereof.

6. The worktop oven for cooking foods (100) according to any one of the preceding claims, **characterised in that** said lid (2) supports a third electric heater (18) for heating said second cooking chamber (9).

7. The worktop oven for cooking foods (100) according to claim 6, **characterised in that** said first electric heater (5) heats said first cooking chamber (8), said third electric heater (18) heats said second cooking chamber (9), and said second electric heater (7) heats both said first cooking chamber (8) and said second cooking chamber (9).

8. The worktop oven for cooking foods (100) according to any one of the preceding claims, **characterised in that** said lid (2) is provided with a control panel (30) for the selective control and management of said first electric heater (5), of said second electric heater (7) and of said third electric heater (18).

9. The worktop oven for cooking foods (100) according to any one of the preceding claims, **characterised in that** said lid (2) is hinged to said intermediate element (3).

10. The worktop oven for cooking foods (100) according to any one of the preceding claims, **characterised in that** said lid (2) and said intermediate element (3) have handgrips (14, 15).

11. The worktop oven for cooking foods (100) according to any one of the preceding claims, **characterised in that** said base (1) has an anti-tip means (20), said anti-tip means (20) having one or more retractable elements which can be slidably mounted or hinged to the rear of said base (1).

12. The worktop oven for cooking foods (100) according to claim 11, **characterised in that** said anti-tip means (20) is actuated manually by the user.

13. The worktop oven for cooking foods (100) according to the preceding claim, **characterised in that** it comprises a position control means which prevents the switching on in the event of lack of manual actuation of said anti-tip means (20) in the work position.

14. The worktop oven for cooking foods (100) according to claim 11, **characterised in that** said anti-tip means (20) is connected to said articulated parallelogram shaped second operating connection means (11) and is actuated automatically with the opening movement of said intermediate compartment (3).

15. The worktop oven for cooking foods (100) according to any one of the preceding claims, **characterised in that** said oven (100) has a mechanical interlocking means which prevents the simultaneous opening of said lid (2) and of said intermediate compartment (3).

## Patentansprüche

1. Ein Arbeitsplattenofen zum Kochen von Lebensmitteln (100), umfassend eine Trägerbasis (1), einen Deckel (2), ein Zwischenelement (3), das zwischen besagter Trägerbasis (1) und besagtem Deckel (2) positioniert ist, wobei besagte Trägerbasis (1) eine erste Kochfläche (4) trägt, mit der ein erster elektrischer Heizkörper (5) verbunden ist, und besagtes Zwischenelement (3) eine zweite Kochfläche (6) trägt, mit der ein zweiter elektrischer Heizkörper (7) verbunden ist, wobei besagtes Zwischenelement (3) so konfiguriert ist, dass es zusammen mit besagter Basis (1) eine erste Kochkammer (8) begrenzt, und besagter Deckel (2) so konfiguriert ist, dass er zusammen mit besagtem Zwischenelement (3) eine zweite Kochkammer (9) begrenzt, die über besagter ersten Kochkammer (8) positioniert ist, wobei ein erstes Betätigungsverbindungsmittel (10) zwischen besagtem Zwischenelement (3) und besagtem Deckel (2) vorhanden ist, das eine Öffnungsposition und eine Schließposition besagter zweiten Kochkammer (9) hat, und wobei ein zweites Betätigungsverbindungsmittel (11), das wie ein Gelenkparallelogramm geformt ist, zwischen besagter Basis (1) und besagtem Zwischenelement (3) vorgesehen ist, das eine Öffnungsposition und eine Schließposition besagter ersten Kochkammer (8) hat.

2. Der Arbeitsplattenofen zum Kochen von Lebensmitteln (100) gemäß Anspruch 1, **gekennzeichnet dadurch, dass** in besagter Schließposition besagtes Zwischenelement (3) auf besagte Basis (1) gestapelt ist, um eine obere Zugangsmündung (12) zu besagter ersten Kochkammer (8) zu verschließen, und in besagter Öffnungsposition wird besagtes Zwischenelement (3) angehoben und zumindest teilweise von besagter oberen Zugangsmündung (12) zu besagter ersten Kochkammer (8) versetzt.

3. Der Arbeitsplattenofen zum Kochen von Lebensmitteln (100) gemäß einem der vorstehenden Ansprüche, **gekennzeichnet dadurch, dass** besagte zweite Kochfläche (6) durch besagtes gelenkparallelogrammförmiges zweites Betätigungsverbindungsmittel (11) angehoben und parallel zur horizontalen Ebene bewegt werden kann.

4. Der Arbeitsplattenofen zum Kochen von Lebensmitteln (100) gemäß einem der vorstehenden Ansprüche, **gekennzeichnet dadurch, dass** besagtes gelenkparallelogrammförmiges zweites Betätigungsverbindungsmittel (11) aus zwei Paaren von Verbindungsstangen besteht, die auf entgegengesetzten Seiten des Ofens positioniert sind und durch untere horizontale Stifte (16) mit der Basis (1) und durch obere horizontale Stifte (17) mit dem Zwischenelement (3) verbunden sind.

5. Der Arbeitsplattenofen zum Kochen von Lebensmitteln (100) gemäß dem vorhergehenden Anspruch, **gekennzeichnet dadurch, dass** besagte Basis (1) eine vertikale Halterung (13) für die Unterstützung besagten Zwischenelements (3) in dessen Öffnungsposition hat.

6. Der Arbeitsplattenofen zum Kochen von Lebensmitteln (100) gemäß einem der vorstehenden Ansprüche, **gekennzeichnet dadurch, dass** besagter Deckel (2) einen dritten elektrischen Heizkörper (18) trägt, um besagte zweite Kochkammer (9) zu erwärmen.

7. Der Arbeitsplattenofen zum Kochen von Lebensmitteln (100) gemäß Anspruch 6, **gekennzeichnet dadurch, dass** besagter erste elektrischer Heizkörper (5) die erste Kochkammer (8) erwärmt, besagter dritte elektrischer Heizkörper (18) die zweite Kochkammer (9) erwärmt und besagter zweite elektrischer Heizkörper (7) sowohl die erste Kochkammer (8) als auch die zweite Kochkammer (9) erwärmt.

8. Der Arbeitsplattenofen zum Kochen von Lebensmitteln (100) gemäß einem der vorstehenden Ansprüche, **gekennzeichnet dadurch, dass** besagter Deckel (2) mit einem Bedienfeld (30) für die selektive Steuerung und Verwaltung des ersten elektrischen Heizkörpers (5), des zweiten elektrischen Heizkörpers (7) und des dritten elektrischen Heizkörpers (18) ausgestattet ist.

9. Der Arbeitsplattenofen zum Kochen von Lebensmitteln (100) gemäß einem der vorstehenden Ansprüche, **gekennzeichnet dadurch, dass** besagter Deckel (2) an besagtem Zwischenelement (3) angebracht ist.

10. Der Arbeitsplattenofen zum Kochen von Lebensmitteln (100) gemäß einem der vorstehenden Ansprüche, **gekennzeichnet dadurch, dass** besagter Deckel (2) und besagtes Zwischenelement (3) Handgriffe (14, 15) haben.

11. Der Arbeitsplattenofen zum Kochen von Lebensmitteln (100) gemäß einem der vorstehenden Ansprüche, **gekennzeichnet dadurch, dass** besagte Basis (1) eine Kippverhinderungseinrichtung (20) hat, wobei besagte Kippverhinderungseinrichtung (20) ein oder mehrere versenkbare Elemente aufweist, die am hinteren Teil besagter Basis (1) verschiebbar montiert oder schwenkbar sind.

12. Der Arbeitsplattenofen zum Kochen von Lebensmitteln (100) gemäß Anspruch 11, **gekennzeichnet dadurch, dass** besagte Kippverhinderungseinrichtung (20) manuell vom Benutzer betätigt wird.

13. Der Arbeitsplattenofen zum Kochen von Lebensmitteln (100) gemäß dem vorhergehenden Anspruch, **gekennzeichnet dadurch, dass** er eine Positionssteuerungseinrichtung umfasst, die das Einschalten im Falle fehlender manueller Betätigung besagter Kippverhinderungseinrichtung (20) in der Arbeitsposition verhindert.

14. Der Arbeitsplattenofen zum Kochen von Lebensmitteln (100) gemäß Anspruch 11, **gekennzeichnet dadurch, dass** besagte Kippverhinderungseinrichtung (20) mit besagtem gelenkparallelogrammförmigen zweiten Betätigungsverbindungsmittel (11) verbunden ist und automatisch mit der Öffnungsbewegung besagten Zwischenelements (3) betätigt wird.

15. Der Arbeitsplattenofen zum Kochen von Lebensmitteln (100) gemäß einem der vorstehenden Ansprüche, **gekennzeichnet dadurch, dass** dieser Ofen (100) eine mechanische Verriegelungseinrichtung hat, die das gleichzeitige Öffnen des Deckels (2) und des Zwischenelements (3) verhindert.

## Revendications

1. Un four de table pour la cuisson d'aliments (100) comprenant une base de support (1), un couvercle (2), un élément intermédiaire (3) positionné entre ladite base de support (1) et ledit couvercle (2), où ladite base de support (1) supporte une première surface de cuisson (4) à laquelle est associé un premier élément chauffant électrique (5), et ledit élément intermédiaire (3) supporte une deuxième surface de cuisson (6) à laquelle est associé un deuxième élément chauffant électrique (7), où ledit élément intermédiaire (3) est configuré pour délimiter avec ladite base (1) une première chambre de cuisson (8) et ledit couvercle (2) est configuré pour délimiter avec ledit élément intermédiaire (3) une deuxième chambre de cuisson (9) positionnée au-dessus de ladite première chambre de cuisson (8), où un premier moyen de connexion de fonctionnement (10) est présent entre ledit élément intermédiaire (3) et ledit couvercle (2), lequel a une position d'ouverture et une position de fermeture de ladite deuxième chambre de cuisson (9), et où un deuxième moyen de connexion de fonctionnement (11) en forme de parallélogramme articulé est prévu entre ladite base (1) et ledit élément intermédiaire (3), lequel a une position d'ouverture et une position de fermeture de ladite première chambre de cuisson (8).

2. Le four de table pour la cuisson d'aliments (100) selon la revendication 1, **caractérisé en ce que**, dans ladite position de fermeture, ledit élément intermédiaire (3) est empilé sur ladite base (1) pour fermer une ouverture d'accès supérieure (12) vers ladite première chambre de cuisson (8), et dans ladite position d'ouverture, ledit élément intermédiaire (3) est relevé et partiellement décalé par rapport à ladite ouverture d'accès supérieure (12) vers ladite première chambre de cuisson (8)

3. Le four de table pour la cuisson des aliments (100) selon l'une quelconque des revendications précédentes, **caractérisé en ce que** ladite deuxième surface de cuisson (6), grâce audit moyen de connexion de commande articulée en forme de parallélogramme (11), peut être relevée et déplacée en parallèle avec le plan horizontal qui reste horizontal.

4. Le four de table pour la cuisson des aliments (100) selon l'une quelconque des revendications précédentes, **caractérisé en ce que** ledit moyen de connexion de commande articulée en forme de parallélogramme (11) comprend deux paires de biellettes positionnées de part et d'autre dudit four et articulées au moyen de broches horizontales inférieures (16) sur la base (1) et au moyen de broches horizontales supérieures (17) sur l'élément intermédiaire (3).

5. Le four de table pour la cuisson des aliments (100) selon la revendication précédente, **caractérisé en ce que** ladite base (1) comporte un support vertical (13) destiné à soutenir ledit élément intermédiaire (3) dans sa position d'ouverture.

6. Le four de table pour la cuisson des aliments (100) selon l'une quelconque des revendications précédentes, **caractérisé en ce que** ledit couvercle (2) supporte un troisième élément chauffant électrique (18) pour chauffer ladite deuxième chambre de cuisson (9).

7. Le four de table pour la cuisson des aliments (100) selon la revendication 6, **caractérisé en ce que** ledit premier élément chauffant électrique (5) chauffe ladite première chambre de cuisson (8), ledit troisième élément chauffant électrique (18) chauffe ladite deuxième chambre de cuisson (9), et ledit deuxième élément chauffant électrique (7) chauffe à la fois ladite première chambre de cuisson (8) et ladite deuxième chambre de cuisson (9).

8. Le four de table pour la cuisson des aliments (100) selon l'une quelconque des revendications précédentes, **caractérisé en ce que** ledit couvercle (2) est pourvu d'un panneau de commande (30) pour le contrôle sélectif et la gestion de ledit premier élément chauffant électrique (5), de ladite deuxième élément chauffant électrique (7) et de ladite troisième élément chauffant électrique (18).

9. Le four de table pour la cuisson des aliments (100) selon l'une quelconque des revendications précédentes, **caractérisé en ce que** ledit couvercle (2) est articulé sur ledit élément intermédiaire (3).

10. Le four de table pour la cuisson des aliments (100) selon l'une quelconque des revendications précédentes, **caractérisé en ce que** ledit couvercle (2) et ledit élément intermédiaire (3) sont équipés de poignées (14, 15).

11. Le four de table pour la cuisson des aliments (100) selon l'une quelconque des revendications précédentes, **caractérisé en ce que** ladite base (1) comporte un dispositif anti-basculement (20), ledit dispositif anti-basculement (20) comprenant un ou plusieurs éléments rétractables pouvant être montés coulissants ou articulés à l'arrière de ladite base (1).

12. Le four de table pour la cuisson des aliments (100) selon la revendication 11, **caractérisé en ce que** ledit dispositif anti-basculement (20) est actionné manuellement par l'utilisateur.

13. Le four de table pour la cuisson des aliments (100) selon la revendication précédente, **caractérisé en ce qu'**il comprend un moyen de contrôle de position qui empêche la mise en marche en cas de manque d'actionnement manuel dudit dispositif anti-basculement (20) en position de travail.

14. Le four de table pour la cuisson des aliments (100) selon la revendication 11, **caractérisé en ce que** ledit dispositif anti-basculement (20) est relié audit moyen de connexion de commande articulée en forme de parallélogramme (11) et est actionné automatiquement lors du mouvement d'ouverture dudit compartiment intermédiaire (3).

15. Le four de table pour la cuisson des aliments (100) selon l'une quelconque des revendications précédentes, **caractérisé en ce que** ledit four (100) comporte un moyen d'interverrouillage mécanique qui empêche l'ouverture simultanée dudit couvercle (2) et dudit compartiment intermédiaire (3).
